(19) Europäisches Patentamt
European Patent Office
Office européen des brevets

(11) Veröffentlichungsnummer: **0 184 554 B1**

# (12) EUROPÄISCHE PATENTSCHRIFT

(45) Veröffentlichungstag der Patentschrift: **23.10.91**

(51) Int. Cl.5: **F21V 7/22**

(21) Anmeldenummer: **85810563.8**

(22) Anmeldetag: **27.11.85**

## (54) Verfahren zur Herstellung lichtreflektierender Körper.

(30) Priorität: **03.12.84 CH 5747/84**

(43) Veröffentlichungstag der Anmeldung:
**11.06.86 Patentblatt 86/24**

(45) Bekanntmachung des Hinweises auf die Patenterteilung:
**23.10.91 Patentblatt 91/43**

(84) Benannte Vertragsstaaten:
**CH DE FR GB IT LI NL**

(56) Entgegenhaltungen:
**EP-A- 0 031 469**
**EP-A- 0 043 797**
**DE-A- 2 719 429**

(73) Patentinhaber: **CIBA-GEIGY AG**
**Klybeckstrasse 141**
**CH-4002 Basel(CH)**

(72) Erfinder: **Breitenfellner, Franz, Dr.**
**Konrad-Adenauer-Strasse 56**
**W-6140 Bensheim 1(DE)**
Erfinder: **Leidig, Karl**
**Heinestrasse 3**
**W-6947 Laudenbach(DE)**
Erfinder: **Kainmüller, Thomas, Dr.**
**Am Kümmelberg 1**
**W-6145 Lindenfels/Odenwald(DE)**

**EP 0 184 554 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung lichtreflektierender Körper und die so erhaltenen lichtreflektierenden Körper.

Die europäische Patentanmeldung 43 797 A2 beschreibt lichtreflektierende Körper, besonders Autoscheinwerfer, deren Wandung aus einem mit 10-60 Gew.% Füllstoff mit einer Partikelgrösse von höchstens 30 µm (Mikrometer) versehenen Poly(1,4-butylenterephthalat) besteht. Als Füllstoffe werden Kaolin, Talkum, Glimmer, Wollastonit, Glaskugeln, Zinksulfid, Lithopone, Calciumsulfat oder Bariumsulfat verwendet, und auf mindestens einer Oberfläche der Wendung ist - gegebenenfalls über eine Lack-Zwischenschicht - eine lichtreflektierende Metallschicht aufgebracht. In der britischen Patentschrift 2.017.127 ist die Verwendung von Calciumcarbonat und gegebenenfalls weitere Füllstoffe enthaltenden Poly(1,4-butylenterephthalat)- und Poly(1,4-cyclohexylendimethylenterephthalat)-Formmassen zur Herstellung lichtreflektierender Körper beschrieben. Aus der DE-AS 27 19 429 ist bekannt, dass sich anorganische Weisspigmente und Stabilisatoren enthaltende Polyalkylenterephthalate zur Herstellung von u.a. Reflektoren eignen.

Die EP-A-31 469 beschreibt ein Verfahren zur Herstellung von hochviskosen Polyalkylenterephthalaten durch eine zweistufige Nachkondensation bei erhöhter Temperatur unter Inertgas, die gegebenenfalls unter Vakuum durchgeführt wird.

Gegenstand der Erfindung ist ein neues Verfahren zur Herstellung von lichtreflektierenden Körpern, deren Wandung aus einem 10-40 Gew.% eines feinteiligen Füllstoffs enthaltenden Polyalkylenterephthalat und/oder Copolyester davon oder einer Mischung aus Polyalkylenterephthalaten besteht, bei dem eine Formmasse zu der für die Wandung eines lichtreflektierenden Körpers gewünschten Form verformt wird und auf mindestens einer Oberfläche der Wandung direkt eine lichtreflektierende Metallschicht aufgebracht wird, das dadurch gekennzeichnet ist, dass man eine

a) 90-60 Gew.% eines Polyalkylenterephthalats und/oder Copolyesters davon oder einer Mischung aus Polyalkylenterephthalaten und

b) 10-40 Gew.% eines feinteiligen Füllstoffes

enthaltende Polyesterformmasse vor der Verformung bei erhöhten, jedoch unterhalb des Schmelzpunktes der Formmasse liegenden Temperaturen einer Vakuumbehandlung unterzieht. Dabei beziehen sich die angegebenen Gewichtsprozente auf die Summe aus a) und b).

Als Polyalkylenterephthalate und Copolyester davon können im erfindungsgemässen Verfahren z.B. solche auf der Basis von linearen oder verzweigten Alkylendiolen mit 2-12 und besonders 2-6 C-Atomen, wie Aethylenglykol, 1,2- oder 1,3-Propandiol, 1,4-Butandiol, 1,5-Pentandiol, Neopentylglykol, 1,6-Hexan-diol und 1,12-Dodecandiol, verwendet werden. Die Alkylendiole sind bevorzugt linear und enthalten insbesondere 2-4 C-Atome. Besonders bevorzugt verwendet man Gemische aus Poly(1,4-butylenterephthalat) und Polyäthylenterephthalat, Poly(1,4-butylenterephthalat) und/oder Copolyester auf der Basis von Poly(1,4-butylenterephthalat). Als Copolyester auf der Basis von Poly(1,4-butylenterephthalat) eignen sich insbesondere solche, in denen, bezogen auf den Polyester, bis zu 25 Mol, vorzugsweise 0,5 bis 15 Mol.%, der Terephthalsäurereste bzw. der 1,4-Butandiolreste durch andere Dicarbonsäurereste oder andere Diolreste ersetzt sind.

Beispiele für Dicarbonsäuren als Cokomponenten sind lineare oder verzweigte aliphatische Dicarbonsäuren, besonders solche mit 2-40 und vor allem 4-10 C-Atomen, wie Oxalsäure, Malonsäure, Bernsteinsäure, Dodecyl- und Octadecylbernsteinsäure, Pimelinsäure, Adipinsäure, Trimethyladipinsäure, Sebacinsäure, Azelainsäure und Dimersäuren (Dimerisationsprodukte von ungesättigten $C_{10}$-$C_{20}$-aliphatischen Carbonsäuren, wie Oelsäure); cycloaliphatische Dicarbonsäuren mit 6-10 C-Atomen, wie 1,3-Cyclobutandicarbonsäure, 1,3-Cyclopentandicarbonsäure, 1,3- und 1,4-Cyclohexandicarbonsäure, 1,3- und 1,4-Methylcyclohexandicarbonsäure und 4,4'-Dicyclohexyldicarbonsäure, oder aromatische Dicarbonsäuren mit z.B. 8-14 C-Atomen, wie Isophthalsäure, Phthalsäure, 1,3-, 1,4-, 2,6- oder 2,7-Naphthalindicarbonsäure, 4,4'-Biphenyldicarbonsäure, 4,4'-Diphenylsulfondicarbonsäure, 1,1,3-Trimethyl-5-carboxyl-3-(p-carboxyphenyl)indan, 4,4'-Diphenylätherdicarbonsäure und 4,4'-Diphenylmethandicarbonsäure.

Beispiele für Diole als Cokomponenten sind lineare oder verzweigte aliphatische Diole der oben genannten Art (mit Ausnahme von 1,4-Butandiol), cycloaliphatische Diole, wie das 1,3- und 1,4-Dihydroxycyclohexan, und aromatische Diole, wie Hydrochinon und Resorcin und besonders Bisphenole der Formel I

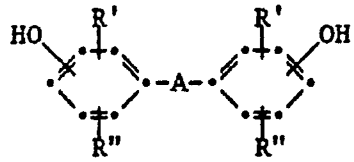 (I),

worin sich die OH-Gruppen in m-Stellung und besonders in p-Stellung befinden und R' und R'' Alkyl mit 1-6 C-Atomen, Halogen, wie Chlor oder Brom, und insbesondere Wasserstoffatome bedeuten. A kann für eine direkte Bindung stehen oder O, S, $SO_2$, $-C_pC_{2p}-$ mit p = 1-4, besonders $-CH_2-$ oder $-C(CH_3)_2-$ bedeuten. Beispiele für solche Bisphenole sind: Bis(p-hydroxyphenyl)äther oder -thioäther, Bis(p-hydroxyphenyl)-sulfon, Bis(p-hydroxyphenyl)methan, 1,2-Bis(p-hydroxyphenyl)äthan, 2,2-Bis(4-hydroxy-3-methylphenyl)-propan, 1,1- oder 2,2-Bis(p-hydroxyphenyl)butan, 2,2-Bis(3,5-dibrom-4-hydroxyphenyl)propan [Tetrabrombisphenol A] und vor allem 2,2-Bis(p-hydroxyphenyl)propan [Bisphenol A].

Weitere geeignete Diole sind z.B. 1,1-Bis(p-hydroxyphenyl)cyclohexan [Bisphenol C]; β-hydroxyalkylierte, besonders β-hydroxyäthylierte Bisphenole, wie 2,2-Bis[4-(β-hydroxyäthoxy)phenyl]propan, 1,4-Bis-(hydroxymethyl)cyclohexan; aromatisch-aliphatische Diole, wie p-Dihydroxymethylbenzol oder 2,5-Dichlor-p-dihydroxymethylbenzol; Polyalkylenglykole, wie Diäthylenglykol, Triäthylenglykol oder Polyäthylenglykole, sowie N,N'-heterocyclische Ringe enthaltende Diole, wie N,N'-(2-Hydroxyäthyl)-5,5-dimethylhydantoin, N,N'-(2-Hydroxyäthyl)benzimidazolon und N,N'-(2-Hydroxyäthyl)-4,5,6,7-tetrabrombenzimidazolon.

Die Polyalkylenterephthalate können auch durch drei- oder vierwertige Alkohole oder drei- oder vierbasische Säuren verzweigt werden. Geeignete Verzweigungsmittel sind z.B. Trimellitsäure, Pyromellitsäure, 1,1,1-Trimethylolpropan und Pentaerythrit.

Die Copolyester enthalten als Cokomponente vorzugsweise Reste des 2,2-Bis[4-(β-hydroxyäthoxy)-phenyl]propans, insbesondere in einer Menge von 0,5-10 Mol.%, vor allem in einer Menge von 2-10 Mol.%, bezogen auf die Diolkomponenten.

Als Komponente a) verwendet man im erfindungsgemässen Verfahren bevorzugt Gemische aus Poly-(1,4-butylenterephthalat) und Polyäthylenterephthalat, Poly(1,4-butylenterephthalat), Poly(1,4-butylenterephthalat)-Copolyester mit 0,5-10 Mol.%, besonders 2-10 Mol.%, 2,2-Bis[4-(β-hydroxyäthoxy)phenyl]propan-Resten oder Gemische aus Poly(1,4-butylenterephthalat) und dem genannten Copolyester. Der Anteil an Komponente a) beträgt vorzugsweise 90-70 Gew.%, besonders 90-80 Gew.%.

Als feinteilige Füllstoffe b) kommen insbesondere solche mit einer mittleren Teilchengrösse unterhalb 30 µm, bevorzugt unterhalb 20 µm, in Betracht. Besonders gute Ergebnisse hinsichtlich ausgewogener mechanischer Eigenschaften und guter Oberflächeneigenschaften werden mit Füllstoffen mit einer mittleren Teilchengrösse unter 5 µm erzielt.

Die Füllstoffe Können in an sich beliebiger Form vorliegen, z.B. in Form von Pulvern, Granulat, Blättchen, kleinen Kugeln oder kurzen Fasern. Geeignete Füllstoffe sind beispielsweise Quarz, Kaolin, Talkum, Glimmer, Graphit, Wollastonit, Glaskugeln, Lithopone, Calciumcarbonat und -sulfat, Bariumcarbonat und -sulfat, Magnesiumcarbonat und -sulfat und anorganische Weisspigmente, wie z.B. Zinksulfid, Zinkoxid, Magnesiumtitanat, Calciumtitanat, Titanphosphat und vor alles Titandioxid. Bevorzugte Füllstoffe sind Glaskugeln, Talkum, Glimmer und Kaolin und ganz besonders Titandioxid. Die Füllstoffe b) werden bevorzugt in einer Menge von 10-30 Gew.%, besonders 20-30 Gew.%, eingesetzt.

Die erfindungsgemäss zu verwendenden Formmassen können auch weitere übliche Zusatzstoffe enthalten, wie z.B. Verstärkerfüllstoffe, wie Kohlenstoff- und vor allem Glasfasern, Stabilisatoren, Fliessmittel, Entformungsmittel, Kristallisationsbeschleuniger und flammhemmende Zusätze. Als flammhemmende Zusätze eignen sich z.B. organische Halogenverbindungen, besonders Chlor- oder Bromverbindungen, die alleine oder zusammen mit synergistisch wirkenden Verbindungen mit Elementen der fünften Hauptgruppe des Periodensystems, besonders Phosphor- und Antimonverbindungen, bevorzugt Antimontrioxid, verwendet werden können.

Als organische Halogenverbindungen kommen z.B. Polytribromstyrol, Octabromdiphenyläther, Decabromdiphenyläther, Tetrabrombisphenol A, N,N'-Aethylen-bis-tetrabromphthalimid und Poly-(pentabrombenzyl)acrylate in Betracht.

Die Vakuumbehandlung der erfindungsgemäss zu verwendenden Formmassen wird zweckmässig bei Temperaturen zwischen 100 und 200° C, vorzugsweise 120 und 180° C und insbesondere 140 und 160° C, vorgenommen. Das Vakuum liegt vorzugsweise unter 900 mbar, bevorzugt unter 200 mbar und besonders unter 10 mbar. Die Dauer der Wärmebehandlung kann innerhalb weiter Grenzen variieren, beträgt aber vorzugsweise mindestens 1/2 Stunde und besonders bevorzugt mindestens 3 Stunden.

Die Formgebung zu lichtreflektierenden Körpern erfolgt nach an sich üblichen Verfahren, bevorzugt nach dem Spritzguss-Verfahren. Dabei liegen die Formtemperaturen im allgemeinen zwischen etwa 20 und 120 ° C, während die Zylindertemperaturen mit Vorteil zwischen 240 und 280 ° C betragen.

Nach der Formgebung wird die zu verspiegelnde Oberfläche der lichtreflektierenden Körper auf an sich bekennte Weise mit einer Metallschicht versehen, vorzugsweise durch Aufdampfen von Aluminium.

Das erfindungsgemässe Verfahren eignet sich zur Herstellung verschiedener lichtreflektierender Körper in Form konvexer, konkaver oder planer Spiegel, z.B. zur Herstellung von Scheinwerfer-Reflektoren, Reflektoren für Rückleuchten, Reflektoren für Verkehrsampeln oder Blinkleuchten. Ein bevorzugtes Anwendungsgebiet sind Scheinwerfer für Kraftfahrzeuge.

Die nach dem erfindungsgemässen Verfahren erhaltenen lichtreflektierenden Körper zeichnen sich durch eine verbesserte Oberflächenqualität und eine hohe Lichtausbeute des aufgedampften Metallspiegels aus. Die gute Oberflächenqualität ermöglicht eine direkte Bedampfung der Wandung mit Metall zur Verspiegelung, so dass auf das Aufbringen einer die Oberflächenqualität verbessernden Lack-Zwischenschicht verzichtet werden kann. Die erfindungsgemäss hergestellten lichtreflektierenden Körper behalten such bei höheren Gebrauchs- oder Umgebungstemperaturen ihre reflektierenden Eigenschaften, und es kommt nicht zu einer allmählichen Ausbildung von matten oder stumpfen Stellen auf der aufgedampften Spiegelschicht.

Das erfindungsgemässe Verfahren wird durch das folgende Beispiel näher erläutert.

Beispiel:

Eine Formmasse bestehend aus

- 50,0 Gew.% Poly(1,4-butylenterephthalat)
- 30,0 Gew.% Co-Poly(1,4-butylenterephthalat) mit 7,5 Mol.% 2,2-Bis[4-(β-hydroxyäthoxy)phenyl]-propan
- 20,0 Gew.% $TiO_2$-Weisspigment

mit einer Viskositätszahl von 105 $cm^3/g$ gemäss DIN-Norm 53728 wird vor der Spritzgiessverarbeitung bei 150 ° C im Vakuum (1,33 mbar) während 3 Stunden vorbehandelt. Anschliessend wird die Formmasse bei einer Zylindertemperatur von 250 ° C, einer Zykluszeit von 45 Sekunden und einer Werkzeugtemperatur von 90 ° C zu Platten von 100x100x2 mm verspritzt. Der Formkörper wird im Vakuum durch Aufdampfen auf der einen Seite mit einer Metallschicht aus Aluminim versehen. Die erhaltene Oberfläche weist einen hohen Glanz auf. Dieser Glanz geht such nach dem Aufbewahren in Luft während 6 Stunden nicht verloren.

**Patentansprüche**

1. Verfahren zur Herstellung von lichtreflektierenden Körpern, deren Wandung aus einem 10-40 Gew.% eines feinteiligen Füllstoffs enthaltenden Polyalkylenterephthalat und/oder Copolyester davon oder einer Mischung aus Polyalkylenterephthalaten besteht, bei dem eine Formmasse zu der für die Wandung eines lichtreflektierenden Körpers gewünschten Form verformt wird und auf mindestens einer Oberfläche der Wandung direkt eine lichtreflektierende Metallschicht aufgebracht wird, dadurch gekennzeichnet, dass man eine
   a) 90-60 Gew.% eines Polyalkylenterephthalats und/oder Copolyesters davon oder einer Mischung aus Polyalkylenterephthalaten und
   b) 10-40 Gew.% eines feinteiligen Füllstoffs
   enthaltende Polyesterformasse vor der Verformung bei erhöhten, jedoch unterhalb des Schmelzpunkts der Formmasse liegenden Temperaturen einer Vakuumbehandlung unterzieht.

2. Verfahren nach Anspruch 1, dadurch gekennzeichnet, dass man als Komponente a) eine Mischung aus Poly(1,4-butylenterephthalat) und Polyäthylenterephthalat verwendet.

3. Verfahren nach Anspruch 1, dadurch gekennzeichnet, dass man als Komponente a) Poly(1,4-butylenterephthalat) verwendet.

4. Verfahren nach Anspruch 1, dadurch gekennzeichnet, dass man als Komponente a) einen Poly(1,4-butylenterephthalat)-Copolyester mit 0,5-10 Mol.% 2,2-Bis-[4-(β-hydroxyäthoxy)phenyl]propan-Resten oder ein Gemisch aus Poly(1,4-butylenterephthalat) und einem Poly(1,4-butylenterephthalat)-Copolyester mit 0,5-10 Mol.% 2,2-Bis-[4-(β-hydroxyäthoxy)phenyl]propan-Resten verwendet.

5. Verfahren nach Anspruch 1, dadurch gekennzeichnet, dass man als Komponente b) feinteilige Füllstoffe mit einer mittleren Teilchengrösse unterhalb 30 µm, besonders unterhalb 20 µm, verwendet.

6. Verfahren nach Anspruch 1, dadurch gekennzeichnet, dass man als Komponente b) Glaskugeln, Talkum, Glimmer oder Kaolin verwendet.

7. Verfahren nach Anspruch 1, dadurch gekennzeichnet, dass man als Komponente b) Titandioxid verwendet.

8. Verfahren nach Anspruch 1, worin der Anteil an Komponente a) 90-70 Gewichtsprozent und der Anteil an Komponente b) 10-30 Gewichtsprozent betragen.

9. Verfahren nach Anspruch 1, dadurch gekennzeichnet, dass die Vakuumbehandlung bei Temperaturen zwischen 100 und 200 °C, vorzugsweise 120 und 180 °C, vorgenommen wird.

10. Verfahren nach Anspruch 1 oder 9, dadurch gekennzeichnet, dass die Vakuumbehandlung bei einem Vakuum unter 900 mbar, bevorzugt unter 200 mbar vorgenommen wird.

**Claims**

1. Process for producing light-reflecting bodies whose wall consists of a polyalkylene terephthalate and/or a copolyester thereof, or of a mixture of polyalkylene terephthalates, containing in each case 10-40 % by weight of a finely divided filler, in which a moulding compound is shaped to the desired shape for the wall of a light-reflecting body, and a light-reflecting metal layer is applied directly to at least one surface of the wall, in which process a polyester moulding compound containing:
   a) 90-60 % by weight of a polyalkylene terephthalate and/or copolyester thereof, or of a mixture of polyalkylene terephthalates, and
   b) 10-40 % by weight of a finely divided filler
   is subjected before shaping, at elevated temperature but at a temperature below the melting point of the moulding compound, to a vacuum treatment.

2. Process according to claim 1, wherein the component a) used is a mixture of poly(1,4-butylene terephthalate) and polyethylene terephthalate.

3. Process according to claim 1, wherein the component a) used is poly(1,4-butylene terephthalate).

4. Process according to claim 1, wherein the component a) used is a poly(1,4-butylene terephthalate) copolyester with 0.5 - 10 mol % of 2,2-bis[4-(β-hydroxyethoxy)phenyl] propane radicals, or a mixture of poly(1,4-butylene terephthalate) and a poly(1,4-butylene terephthalate) copolyester with 0.5 - 10 mol % of 2,2-bis[4-(β-hydroxyethoxy)phenyl]propane radicals.

5. Process according to claim 1, wherein the component b) used is a finely divided filler having a mean particle size below 30 µm, in particular below 20 µm.

6. Process according to claim 1, wherein the component b) used is glass beads, talc, mica or kaolin.

7. Process according to claim 1, wherein the component b) used is titanium dioxide.

8. Process according to claim 1, wherein the proportion of component a) is 90-70 per cent by weight, and the proportian of component b) is 10-30 per cent by weight.

9. Process according to claim 1, wherein the vacuum treatment is performed at a temperature of between 100 and 200 °C, preferably between 120 and 180 °C.

10. Process according to claim 1 or 9, wherein the vacuum treatment is performed in a vacuum of below 900 mbar, preferably below 200 mbar.

**Revendications**

**1.** Procédé pour fabriquer des objets réflecteurs de lumière dont la paroi est en un poly-(téréphtalate d'alkylène) et/ou en un copolyester de celui-ci ou en un mélange de poly-(téréphtalates d'alkylènes) contenant de 10 à 40% en poids d'une charge en fines particules, selon lequel on donne à une matière à mouler la forme voulue pour la paroi d'un objet réflecteur de lumière et on applique directement, sur au moins une surface de la paroi, une couche métallique photoréflectrice, procédé caractérisé en ce qu'on soumet une matière à mouler en polyester contenant :

a) de 90 à 60% en poids d'un poly-(téréphtalate d'alkylène) et/ou d'un copolyester qui en dérive ou d'un mélange de poly-(téréphtalates d'alkylènes) et

b) de 10 à 40% en poids d'une charge en fines particules,

avant de la mouler, à un traitement sous vide, à des températures élevées mais inférieures au point de fusion de la matière à mouler.

**2.** Procédé selon la revendication 1 caractérisé en ce qu'on utilise, comme composante a), un mélange de poly-(téréphtalate de butylène-1,4) et de poly-(téréphtalate d'éthylène).

**3.** Procédé selon la revendication 1 caractérisé en ce qu'on utilise, comme composante a), du poly-(téréphtalate de butylène-1,4).

**4.** Procédé selon la revendication 1 caractérisé en ce qu'on utilise, comme composante a), un copolyester de poly-(téréphtalate de butylène-1,4) avec de 0,5 à 10% en moles de radicaux de bis-[(hydroxy-2 éthoxy)-4 phényl]-2,2 propane, ou un mélange de poly-(téréphtalate de butylène-1,4) et d'un copolyester de poly-(téréphtalate de butylène-1,4) avec de 0,5 à 10% en moles de radicaux de bis-[(hydroxy-2 éthoxy)-4 phényl]-2,2 propane.

**5.** Procédé selon la revendication 1 caractérisé en ce qu'on utilise, comme composante b), des charges en fines particules qui ont une dimension particulaire moyenne inférieure à 30 µm, en particulier inférieure à 20 µm.

**6.** Procédé selon la revendication 1 caractérisé en ce qu'on utilise, comme composante b), des billes de verre, du talc, du mica ou du kaolin.

**7.** Procédé selon la revendication 1 caractérisé en ce qu'on utilise, comme composante b), du dioxyde de titane.

**8.** Procédé selon la revendication 1 selon lequel la proportion de la composante a) est de 90 à 70% en poids et celle de la composante b) est de 10 à 30% en poids.

**9.** Procédé selon la revendication 1 caractérisé en ce que le traitement sous vide est effectué à des températures comprises entre 100 et 200 °C, de préférence entre 120 et 180 °C.

**10.** Procédé selon l'une des revendications 1 et 9, caractérisé en ce que le traitement sous vide est effectué sous un vide inférieur à 900 mbar, de préférence inférieur à 200 mbar.